# EUROPÄISCHE PATENTSCHRIFT

(11) **EP 1 644 096 B1**
(45) Veröffentlichungstag und Bekanntmachung des Hinweises auf die Patenterteilung: **24.12.2008**
(21) Anmeldenummer: 04763152.8
(22) Anmeldetag: 09.07.2004
(51) Int. Cl.: B01D 24/16, A47J 31/60

(54) **WASSERTANK MIT FILTERPATRONE**
WATER TANK WITH FILTER CARTRIDGE
RESERVOIR D'EAU AVEC CARTOUCHE FILTRANTE

(30) Priorität: 10.07.2003 DE 10331402; 17.12.2003 DE 10359443
(43) Veröffentlichungstag der Anmeldung: 12.04.2006
(60) Teilanmeldung: 08019344.4
(73) Patentinhaber: Aquis Wasser-Luft-Systeme GmbH, Lindau, 9445 Rebstein (CH)
(72) Erfinder: WAWRLA, Andreas, CH-9443 Widnau (CH); ZUCHOLL, Klaus, 68199 Mannheim (DE)
(74) Vertreter: Roth, Klaus
(86) Internationale Anmeldenummer: PCT/EP2004/007605
(87) Internationale Veröffentlichungsnummer: WO 2005/005013

(56) Entgegenhaltungen:
- DE-A- 19 827 623
- FR-A- 2 475 520
- GB-A- 1 448 844
- US-A- 5 860 354

## Beschreibung

Die Erfindung betrifft einen Wassertank mit einer Filterpatrone für eine Haushaltsmaschine nach dem Oberbegriff des Anspruchs 1 sowie eine entsprechende Haushaltsmaschine.

Zum Einsatz in Getränkeautomaten sind Filterpatronen bekannt geworden, die unmittelbar in den Wassertank der Getränkemaschine eingesetzt werden. Diese Filterpatronen sind mit bodenseitigen Wassereintrittsöffnungen versehen, durch die das Wasser eintritt und anschließend das Filtermaterial im Aufstrom passiert. Anschließend wird das gefilterte Wasser in einer zentralen Fallleitung im Innern der Filterpatrone nach unten geführt, wo die Filterpatrone bzw. die Fallleitung mit einem Sauganschluss der Maschine verbunden ist.

Aus dem Stand der Technik ist die FR 2 475 520 bekannt, die einen Wasserfilterreiniger für Haushaltskaffeemaschinen zeigt, bei dem ein Wassertank mit einer darin eingesetzten Wasserfilterpatrone offenbart ist. Diese im Aufstromverfahren betriebene Wasserfilterpatrone ist über einen außerhalb des Wassertanks verlaufende Leitung mit einem Sauganschluss einer Wasserpumpe angeschlossen. Aus der GB 1 448 844 ist eine weitere Vorrichtung zur Wasseraufbereitung bekannt, bei der eine in einem fest an dem Gerät angeschlossenen Wassertank angeordneten, im Aufstromverfahren arbeitende Filterpatrone im Druckbetrieb betrieben wird, wobei die Ausleitung des durch den Filter gefilterten Wassers außerhalb des Tanks erfolgt.

Die Erfindung hat die Aufgabe, einen Anschluss zwischen einem Wassertank und einer darin eingesetzten Filterpatrone zu verbessern.

Diese Aufgabe wird ausgehend von einem Wassertank der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßer Wassertank mit einer außerhalb des Filtergehäuses verlaufenden Abflussleitung mit einer Verbindung an eine Saugleitung der Haushaltsmaschine, dadurch aus, dass die Abflussleitung als durch eine Trennwand gebildete Fallleitung oder eine im Innern des Wassertanks separat angebrachte Fallleitung ausgebildet und mit einer verschließbaren Verbindungsöffnung im Bodenbereich des Wassertanks versehen ist.

Das heißt, vorzugsweise wird eine fest in den Wassertank integrierte, z.B. durch eine solche Trennwand gebildete Fallleitung oder eine im Innern des Wassertanks separat angebrachte Fallleitung der Filterpatrone mit einer verschließbaren Öffnung im Bodenbereich des Wassertanks versehen. Dies ermöglicht den Betrieb der entsprechenden Maschine ohne eingesetzte Filterpatrone, indem diese Verbindungsöffnung geöffnet wird. Durch die bodennahe Anordnung dieser Verbindungsöffnung kann der Wassertank , zumindest bis auf Höhe dieser Öffnung auch ohne Filterpatrone entleert werden. Die Verschlussbetätigung kann dabei mit dem Filtereinsatz gekoppelt werden oder separat manuell oder automatisch durch die Haushaltsmaschine stattfinden.

Das heißt, in einer möglichen Ausführungsform der Erfindung wird eine Fallleitung durch eine Trennwand im Wassertank gebildet. Eine solche Trennwand ist bei der Fertigung des Wassertanks, der insbesondere bei Getränkeautomaten aus verschiedenen Gründen häufig eine flache Form aufweist, leicht anzubringen. In diesem Fall ist die Ausbildung der Abflussleitung mit sehr geringem Aufwand möglich. Die durch eine Trennwand vom restlichen Wassertank abgetrennte Fallleitung ist an der Oberseite anschließend mit entsprechenden Kupplungselementen zum Anschluss der Filterpatrone zu versehen.

Durch diese Maßnahme entfällt eine zentrale Fallleitung. Das Filtergehäuse kann einfacher ausgebildet werden, so dass eine leichtere Be- und Entfüllung möglich wird. Durch den einfacheren Filteraufbau wird insgesamt weniger Material verbaut, was die spätere Entsorgung der verbrauchten Filterpatronen erleichtert. Auch die Möglichkeit einer leichteren Materialtrennung vereinfacht die Entsorgung durch sortenreinen Abfall.

Sofern ein schüttfähiges Filtermaterial vorgesehen wird, ist auf beiden Seiten des Filtermaterials eine wasserdurchlässige Trennwand, z.B. in Form eines Siebes erforderlich. Eine solche Trennwand ist ohne zentrale Fallleitung ebenfalls erheblich einfacher zu gestalten.

Durch Vorsehen einer Kupplung zwischen Abflussleitung und dem Filtergehäuse kann die außerhalb des Filtergehäuses verlaufende Abflussleitung so bei einem Wechsel der Filterpatrone beibehalten werden, so dass der Materialaufwand für den zu wechselnden Einsatz weiter reduziert wird. Durch die nochmalige Reduzierung der Menge des zu wechselnden Materials wird wiederum die Entsorgung erleichtert.

Darüber hinaus wird dadurch auch die Filtermontage vereinfacht, da die Anschlussverbindung zur an der Haushaltsmaschine verbleibenden Abflussleitung für den Bediener zumindest sichtbar, je nach Ausführung auch unmittelbar zugänglich angeordnet werden kann.

Die Ausbildung der Abflussleitung als Fallleitung im Wassertank bietet den Vorteil, dass die erfindungsgemäße Filterpatrone in herkömmlichen Getränkeautomaten einsetzbar ist, bei denen ein Wasserabzug im Bodenbereich des Wassertanks vorgesehen ist. Die Fallleitung wird hierbei bevorzugt, wie oben angeführt, als von der Filterpatrone separates Teil gefertigt, das in den Wassertank eingesetzt wird und dort auch beim Filterwechsel verbleibt. Die Filterpatrone wird mit der stationär vorgesehenen Fallleitung lösbar verbunden, wobei die Verbindung oberhalb oder unterhalb des Wasserpegels liegen kann. Da diese Kupplungsstelle zwischen Fallleitung und Filtergehäuse ebenso wie die Kupplungsstelle zwischen Fallleitung und Sauganschluss im Innern des Wassertanks angeordnet ist, sind keine größeren Dichtmaßnahmen erforderlich. Die Filterpatrone selbst kann wie o.a. als einfaches leicht mit Filtermaterial zu füllendes und wieder entleerbares und somit sortenrein entsorgbares Gehäuse hergestellt werden.

Ein solches Gehäuse kann darüber hinaus gereinigt und wiederbefüllt werden, so dass nur noch das Filtermaterial selbst als Abfall anfällt.

In einer vorteilhaften Weiterbildung dieser Ausführungsform wird der Verschluss bzw. das Öffnen dieser Verbindungsöffnung mit dem Einsatz bzw. der Entfernung einer Wasserfilterpatrone verbunden. Dies kann beispielsweise durch einen entsprechenden ggf. mit Dichtelementen versehenen Schiebermechanismus bewirkt werden, der durch Schließen der Kupplung zwischen Fallleitung und Filterpatrone betätigt wird.

Auch ein Verdrehen der Fallleitung zur Herstellung der Kupplung mit der Filterpatrone wäre denkbar, um zugleich eine Verbindungsöffnung im bodennahen Bereich zu verschließen. Darüber hinaus wäre eine besondere Weiterbildung der Erfindung denkbar, in der die Filterpatrone unter Formschluss an die separate Fallleitung angefügt wird und dabei über die Außenwand des Filtergehäuses eine entsprechende Öffnung verschließt.

Im Falle einer Trennwand im Wassertank zur Herstellung einer Fallleitung könnte beispielsweise eine Filterpatrone in einer entsprechenden Führung der Trennwand geführt und bis zur Verbindungsöffnung eingesteckt werden.

Wie bereits oben erwähnt, wird in einer besonderen Ausführungsform der Erfindung eine Kupplung zwischen Abflussleitung und Saugleitung vorgesehen. Dies hat zum einen den Vorteil, dass eine erfindungsgemäße Filterpatrone auch in bestehende Haushaltsmaschinen, insbesondere Kaffeeautomaten, eingesetzt werden kann, indem die Abflussleitung in den Wassertank eingesetzt und mit dem bodenseitigen Anschluss für die Saugleitung verbunden wird. Darüber hinaus kann eine solche Abflussleitung im Falle eines Defekts leicht ausgetauscht werden.

Weiterhin wird in einer vorteilhaften Weiterbildung dieser Ausführungsform die Abflussleitung zugleich als Adapterstück zur Anpassung einer Filterpatrone an den jeweiligen Maschinentyp ausgebildet. Somit kann ein und dieselbe Filterpatrone bei unterschiedlichen Maschinentypen oder umgekehrt können verschiedene Filterpatronen bei ein und derselben Maschine verwendet werden, wobei lediglich das entsprechende Adapterstück einzusetzen ist, das in diesem Fall zugleich die Abflussleitung der Filterpatrone beinhaltet.

Eine Filterpatrone kann vorteilhafterweise auch mit einer Anzeige für den Zeitpunkt des erforderlichen Filterwechsel versehen werden. Eine solche Anzeige kann beispielsweise mit einem Sättigungssensor ausgestattet sein, der die Erschöpfung der Filterkapazität angibt. Auch eine Durchflussmessung oder Zeiteinstellung kann zur Bestimmung dieses Zeitpunktes herangezogen werden.

Ein Ausführungsbeispiel der Erfindung ist in der Zeichnung dargestellt und wird anhand der Figuren nachfolgend näher erläutert.

Im Einzelnen zeigen
- Fig. 1: eine schematische Schnittdarstellung eines Wassertanks mit erfindungsgemäßer Filterpatrone,
- Fig. 2: eine schematische Darstellung einer weiteren Ausführungsform,
- Fig. 3: eine Darstellung gemäß Fig. 2 einer dritten Ausführungsform der Erfindung,
- Fig. 4: eine Darstellung gemäß den Fig. 2 und 3 einer vierten Ausführungsform der Erfindung.

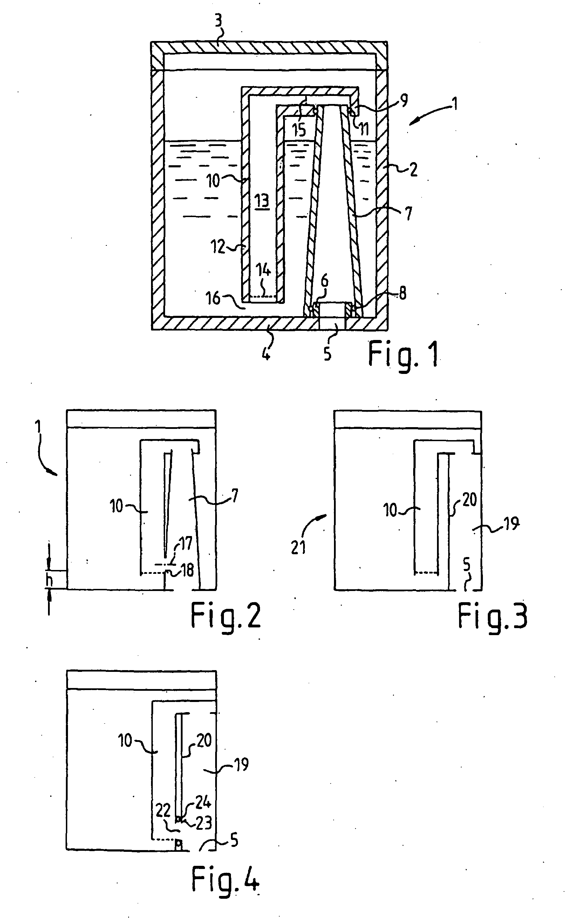

In Fig. 1 ist der Wassertank 1 einer Haushaltsmaschine, z.B. eines Getränke- bzw. Kaffeeautomaten dargestellt. Der Wassertank 1 umfasst einen Behälter 2, der über einen Deckel 3 verschließbar ist. Im Boden 4 des Wassertanks 1 bzw. Behälters 2 ist eine Saugöffnung 5 für einen nicht näher dargestellten Anschluss an die entsprechende Haushaltsmaschine, z.B. einen Getränkeautomaten, wie ein Kaffeeautomat oder dergleichen vorhanden.

Auf der Innenseite der Saugöffnung 5 ist ein Ringbund 6 vorgesehen, auf den eine Fallleitung 7 aufgesteckt ist. In der dargestellten Ausführungsform ist ein Dichtring 8 zum dichten Anschluss der Fallleitung 7 vorgesehen.

Auf der Oberseite der Fallleitung 7 ist ein Steckelement 9 einer Filterpatrone 10 aufgesteckt und wiederum durch einen Dichtring 11 abgedichtet. Die Filterpatrone 10 umfasst ein rohrförmiges Filtergehäuse 12, das eine Filterkammer 13 aufweist, die durch zwei Siebe 14, 15 abgeschlossen ist. In der Filterkammer 13 ist das benötigte Filtermaterial untergebracht. In Fig. 1 ist erkennbar, dass das Filtergehäuse 12 demnach unten offen ist, so dass der Spalt 16 zwischen Filtergehäuse 12 und Behälterboden 4 die Eintrittsöffnung in die Filterkammer 13 bildet.

Sobald an der Saugöffnung 5 Wasser angesaugt wird, findet eine aufwärts gerichtete Wasserströmung durch die Filterkammer 13 zum oberen Bereich der Fallleitung 7 statt.

Bei Erschöpfung der Filterpatrone 10 wird diese mitsamt dem Steckelement 9 von der Fallleitung 7 abgenommen und ausgetauscht. Die Fallleitung 7 kann hierbei im Wassertank 1 verbleiben.

In der dargestellten Ausführungsform ist die Fallleitung 7 ohne weiteres als Adapterstück auszubilden, die zwischen verschiedenartigen Anschlusselementen einsetzbar ist. Eine in der Fallleitung vorgesehene, verschließbare Verbindungsöffnung 17 ist in den Figuren 2 und 4 dargestellt, nicht jedoch in der Schnittdarstellung der Figur 1 und in der Figur 3, da diese beiden Darstellungen z.B. in einer anderen Ansichtsebene liegen.

Fig. 2 zeigt eine weitere Ausführungsvariante, die im Wesentlichen der in Fig. 1 dargestellten Ausführung entspricht. Abweichend hiervon ist die Filterpatrone 10 formschlüssig im unteren Bereich an die Fallleitung 7 angepasst. Somit ist es möglich, eine mittels eines Striches dargestellte Durchgangsöffnung 17 zwischen dem Inneren des Behälters 2 und dem Inneren der Fallleitung 7 herzustellen, die mittels des Wandbereiches 18 der Filterpatrone 10 bei eingesetzter Filterpatrone abgedichtet wird. Auf diese Weise kann auch bei entfernter Filterpatrone 10 der Wassertank 1 bis auf eine Höhe h, in der die Öffnung 17 liegt, entleert werden und somit ist die entsprechende Haushaltsmaschine auch ohne Filterpatrone zu betreiben.

Die Ausführung gemäß Fig. 3 entspricht wiederum im Wesentlichen den vorgenannten Ausführungsbeispielen, wobei nunmehr die Fallleitung 19 durch eine Trennwand 20 im Randbereich des Wassertanks 21 ausgebildet ist. In dieser Ausführungsform ist kein der Fallleitung 7 entsprechendes Zwischenstück zwischen Filterpatrone 10 und Fallleitung 19 erforderlich.

Fig. 4 zeigt eine Ausführung entsprechend Fig. 3, wobei nunmehr die Filterpatrone 10 dicht an der Trennwand 20 entlang geführt ist, so dass in der Trennwand 20 eine bodennahe Öffnung 22 durch den entsprechenden Wandbereich 23 der Filterpatrone 10 verschließbar ist. Vorliegend wurde ein Dichtelement 24 eingezeichnet, um die Möglichkeit zusätzlicher Abdichtmaßnahmen anzudeuten.

Auch diese Ausführungsform ermöglicht den Betrieb der entsprechenden Haushaltsmaschine ohne Filterpatrone 10, wobei wiederum der Wasserfluss bei entfernter Filterpatrone durch die Öffnung 22 stattfinden kann.

### Bezugszeichenliste:

- 1: Wassertank
- 2: Behälter
- 3: Deckel
- 4: Boden
- 5: Saugöffnung
- 6: Ringbund
- 7: Fallleitung
- 8: Dichtring
- 9: Steckelement
- 10: Filterpatrone
- 11: Dichtring
- 12: Filtergehäuse
- 13: Filterkammer
- 14: Sieb
- 15: Sieb
- 16: Spalt
- 17: Öffnung
- 18: Wandbereich
- 19: Fallleitung
- 20: Trennwand
- 21: Wassertank
- 22: Öffnung
- 23: Wandbereich
- 24: Dichtelement
- 25: Fallleitung
- 26: Wassertank
- 27: Boden
- 28: Filterpatrone
- 29: Deckel
- 30: Kupplungselement
- 31: Kupplung
- 32: Fallleitung
- 33: Deckel
- 34: Kupplung
- 35: Seitenwand

## Patentansprüche

1. Wassertank (1) mit Wasserfilterpatrone (10) für eine Haushaltsmaschine, wie einen Getränkeautomaten, insbesondere einen Kaffeeautomaten, einen Dampfreiniger oder dergleichen, wobei die Wasserfilterpatrone (10) zum Einsetzen in den Wassertank (1) vorgesehen ist und ein,Filtergehäuse (12) umfasst, in dem ein Filtermaterial zwischen einem unteren Zulauf und einem oberen Ablauf angeordnet ist, wobei das Gehäuse im Bodenbereich eine oder mehrere Wassereintrittsöffnungen aufweist, wobei eine außerhalb des Filtergehäuses (2) verlaufende Abflussleitung zu einer Saugleitung (5, 19) der Haushaltsmaschine vorgesehen ist, **dadurch gekennzeichnet, dass** die Abflussleitung als durch eine Trennwand gebildete Fallleitung oder eine im Innern des Wassertanks separat angebrachte Fallleitung ausgebildet und mit einer verschließbaren Verbindungsöffnung (17) im Bodenbereich des Wassertanks (1) versehen ist.

2. Wassertank mit Wasserfilterpatrone nach Anspruch 1, **dadurch gekennzeichnet, dass** eine Kupplung (9, 11) zwischen der Abflussleitung (7) und dem Filtergehäuse (12) vorgesehen ist.

3. Wassertank mit Wasserfilterpatrone nach einem der vorgenannten Ansprüche, **dadurch gekennzeichnet, dass** die Verbindungsöffnung (17) durch den Einsatz einer Wasserfilterpatrone verschließbar ist.

4. Haushaltsmaschine, wie ein Getränkeautomat, insbesondere ein Kaffeeautomat, ein Dampfreiniger oder dergleichen mit Wassertank (1) mit einer Wasserfilterpatrone (10), **dadurch gekennzeichnet, dass** der Wassertank (1) und die Wasserfilterpatrone (10) nach einem der Ansprüche 1 bis 3 ausgebildet sind.

5. Haushaltsmaschine nach Anspruch 4 **dadurch gekennzeichnet, dass** Kupplungselemente zur Verbindung der Abflussleitung der Filterpatrone mit der Saugleitung der Haushaltsmaschine vorgesehen sind.

6. Haushaltsmaschine nach Anspruch 4 oder 5 **dadurch gekennzeichnet, dass** die Abflussleitung als Adapterstück zum Anschluss der Filterpatrone an die Saugleitung unterschiedlicher Haushaltsmaschinen ausgebildet ist.

## Claims

1. Water tank (1) with a water filter cartrldge (10) for a household machine, such as a beverage dispenser, in particular a coffee machine, a steam cleaner or the like, wherein the water filter cartridge (10) Is provided for inserting into the water tank (1) and comprises a filter housing (12), In which a filter material is arranged between a lower inlet and upper outlet, whereby the housing in the bottom part has one or more water inlet openings, whereby a discharge line running outside the filter housing (2) is provided connecting to a suction line (5, 19) of the household machine, **characterised in that** the discharge line is designed as a downward line formed by a separating wall or a downward line attached separately to the inside of the water tank and Is provided with a closable connecting opening (17) in the bottom part of the water tank (1).

2. Water tank with a water filter cartridge according to claim 1, **characterised in that** a coupling (9, 11) is provided between the discharge line (7) and the filter housing (12).

3. Water tank with a water filter cartridge according to one of the preceding claims, **characterised in that** the connecting opening (17) can be closed by using a water filter cartridge.

4. Household machine, such as a beverage dispenser, in particular a coffee machine, a steam cleaner or the like with a water tank (1) with a water filter cartridge (10), **characterised in that** the water tank (1) and the water filter cartridge (10) are configured according to one of claims 1 to 3.

5. Household machine according claim 4, **characterised in that** coupling elements are provided for connecting the discharge line of the filter cartridge with the suction line of the household machine.

6. Household machine according to claim 4 or 5, **characterised in that** the discharge line is designed as an adapter part for connecting the filter cartridge to the suction line of different household machines.

## Revendications

1. Réservoir à eau (1) avec cartouche de filtration d'eau (10) pour un appareil électroménager tel qu'un distributeur automatique de boissons, notamment un distributeur automatique de café, un nettoyeur à vapeur ou analogue, la cartouche de filtration d'eau (10) étant prévue pour être installée dans le réservoir à eau (1) et comprenant un boîtier de filtre (12), dans lequel un matériau filtrant est agencé entre une entrée inférieure et une sortie supérieure, le boîtier présentant dans la zone de fond une ou plusieurs ouvertures d'entrée d'eau, une conduite d'écoulement s'étendant à l'extérieur du boîtier de filtre (12) vers une conduite d'aspiration (5, 19) de l'appareil électroménager étant prévue,
**caractérisé en ce que** la conduite d'écoulement est réalisée sous forme de conduite de descente formée par une cloison ou sous la forme d'une conduite de descente montée séparément à l'intérieur du réservoir à eau et est pourvue d'une ouverture de communication obturable (17) dans la zone de fond du réservoir à eau (1).

2. Réservoir à eau avec cartouche de filtration d'eau selon la revendication 1,
**caractérisé en ce qu'**il est prévu un accouplement (9, 11) entre la conduite d'écoulement (7) et le boîtier de filtre (12).

3. Réservoir à eau avec cartouche de filtration d'eau selon l'une des revendications précédentes,
**caractérisé en ce que** l'ouverture de communication (17) peut être obturée par la mise en place d'une cartouche de filtration d'eau.

4. Appareil électroménager tel qu'un distributeur automatique de boissons, notamment un distributeur automatique de café, un nettoyeur à vapeur ou analogue, avec réservoir à eau (1) comportant une cartouche de filtration d'eau (10),
**caractérisé en ce que** le réservoir à eau (1) et la cartouche de filtration d'eau (10) sont réalisés selon l'une des revendications 1 à 3.

5. Appareil électroménager selon la revendication 4,
**caractérisé en ce qu'**il est prévu des éléments d'accouplement destinés à faire communiquer la conduite d'écoulement de la cartouche filtrante avec la conduite d'aspiration de l'appareil électroménager.

6. Appareil électroménager selon les revendications 4 ou 5,
**caractérisé en ce que** la conduite d'écoulement est réalisée sous forme d'élément d'adaptateur destiné à raccorder la cartouche filtrante à la conduite d'aspiration de différents appareils électroménagers.
